# EUROPÄISCHE PATENTSCHRIFT

(11) **EP 2 292 849 B1**
(45) Veröffentlichungstag und Bekanntmachung des Hinweises auf die Patenterteilung: **16.11.2011**
(21) Anmeldenummer: 10015397.2
(22) Anmeldetag: 22.04.2005
(51) Int. Cl.: E03B 9/14

(54) **Verfahren zur Endmontage einer Regulier- und Absperrarmatur**
Regulating and shut-off armature and method of its final assembly
Armature de régulation et d'arrêt et procédé de son montage final

(30) Priorität: 11.11.2004 DE 102004054612
(43) Veröffentlichungstag der Anmeldung: 09.03.2011
(62) Teilanmeldung aus: 05004117.7
(73) Patentinhaber: Gebr. Kemper GmbH + Co. KG Metallwerke, 57462 Olpe (DE)
(72) Erfinder: Fries, Stefan, 57462 Olpe (DE)
(74) Vertreter: Grünecker, Kinkeldey, Stockmair & Schwanhäusser

(56) Entgegenhaltungen:
- DE-A1- 10 315 224
- DE-U1- 29 820 782

## Beschreibung

Die vorliegende Erfindung betrifft ein Verfahren zur Endmontage einer Regulier- und Absperrarmatur wie sie beispielsweise aus dem DE-U-200 01 883 bekannt ist.

Eine derartige Armatur hat ein Ventilgehäuse, in dem ein Ventilkegel verschieblich geführt und dichtend an einen an dem Ventilgehäuse ausgebildeten Ventilsitz zur Anlage bringbar ist. Ferner weist das Regulier- und Absperrventil ein Ventilauslaufgehäuse auf, in das ein Ventiloberteil mit einer drehbar in diesem angeordneten und mit einem Drehgriff verbundenen Spindel eingeschraubt ist. Zwischen dem Ventilgehäuse und dem Ventilauslassgehäuse ist ein Zwischenrohr vorgesehen, dessen Länge derart bemessen ist, dass das Ventilgehäuse im Innenbereich eines Gebäudes und das Ventilauslaufgehäuse die Außenwand des Gebäudes überragend angeordnet werden kann. Das Zwischenrohr umgibt eine Zwischenspindel, die mit der Spindel im Eingriff steht, so dass durch Drehen an dem Drehgriff eine axiale Verstellung der Zwischenspindel erfolgt, die auf den Ventilkegel übertragen wird, welcher in Wirkverbindung mit der Zwischenspindel steht. Üblicherweise ist der Ventilkegel in seiner Führung längsverschieblich gelagert und mittels Federkraft gegen den Ventilsitz vorgespannt, so dass die Funktion eines Rückflussverhinderers gegeben ist. Ferner weist die vorbekannte Regulier- und Absperrarmatur ein Belüftungsventil auf, das ein bei geöffnetem Ventilkegel eine Belüftungsöffnung verschließendes Dichtelement hat, welches die Belüftungsöffnung bei geschlossenem Ventilkegel freigibt.

Bei der vorbekannten Regulier- und Absperrarmatur ist ein unter Federvorspannung an dem Ventilauslaufgehäuse angebrachter Belüftungsventilkörper vorgesehen. Dieser wird bei einem in dem Ventilauslaufgehäuse wirkenden Innendruck, der auch auf den Belüftungsventilkörper wirkt, im Belüftungsventil geschlossen, wohingegen bei abgesperrter Armatur und ablaufendem Wasser aus der Armatur sich das Belüftungsventil bei abgebautem Innendruck schwerkraftbedingt öffnet, um einen zwischen der Zwischenspindel und dem Zwischenrohr zwischen dem Ventiloberteil und dem Ventilkegel ausgebildeten Zwischenraum zu belüften, wenn die Absperrarmatur abgesperrt ist, d.h. der Ventilkegel an dem Ventilsitz dichtend anliegt. Die Steuerung des Belüftungsventils ist aber nicht immer zuverlässig. So kann es vorkommen, dass an einem Auslassstutzen des Ventilauslaufgehäuses ein Schlauch angeschlossen ist, welcher endseitig verschlossen wird, bevor die Regulier- und Absperrarmatur geschlossen wird. In diesem Fall wird der Wasserinnendruck in dem Ventilauslaufgehäuse nicht abgebaut, so dass das Belüftungsventil nicht schwerkraftbedingt öffnet und eine Belüftung der Armatur danach nicht erfolgt. Bei Frost kann die Armatur beschädigt werden.

Aus der US 4,475,510 ist eine Regulier- und Absperrarmatur bekannt, bei dem der Ventilkegel über eine Zwischenspindel verdrehfest mit dem Drehgriff verbunden ist. Der Ventilkegel wird von einer in dem Ventilsitzgehäuse im Gewindeeingriff stehenden Hülse getragen, die einen Wasserdurchgang in axialer Richtung über den Gewindeteil des Ventilsitzgehäuses zulässt. Bei der aus der US 4,475,570 bekannten Regulier-Absperrarmatur ist die Spindel und die Zwischenspindel als einteiliges Bauteil ausgebildet, so dass im Gegensatz zu dem gattungsbildenden Stand der Technik, bei dem aufgrund der Ausgestaltung des Ventiloberteils der Drehgriff bei Betätigung nicht steigt, der Drehgriff zusammen mit der Spindel und Zwischenspindel bei Drehbetätigung seine Lage verändert. Mit der Spindel ist ein Belüftungselement verbunden, welches an seinem ventilauslaufgehäuseseitigen Ende eine Anlauframpe aufweist und an dem anderen Ende mit einer Dichtung versehen ist, die dichtend in das drehgriffseitige Ende des Ventilauslaufgehäuses eingesetzt ist.

Beim Absperren der Armatur wandert das Belüftungselement zusammen mit der Spindel in Richtung auf das Ventilsitzgehäuse. Hierbei gleitet zunächst der Dichtring in dem Ventilauslaufgehäuse. Die Anlauframpe stößt dann gegen das Betätigungsende eines vorgespannten Belüftungsventils. Der Ventilkörper besteht in seinem vorderen Teil aus einem mit einem Dichtring versehenen Zylinderabschnitt, der an dem Ventilsitzgehäuse ausgespart ist. Beim Absperren der Armatur läuft dieser Zylinderabschnitt in eine zylindrische Bohrung ein. Zur gleichen Zeit läuft die Ablauframpe gegen das Belüftungsventil, welches bei fortschreitender Drehbewegung zum Absperren der Armatur das Belüftungsventil durch Relativbewegung vollständig öffnet. Dabei drängt der zylindrische Abschnitt des Ventilkegels tiefer in die zylindrische Bohrung ein, bis ein dahinterliegender Konusabschnitt des Ventilkegels gegen das Ventilsitzgehäuse angelegt und die axiale Relativbewegung des Ventilkegels zusammen mit der Zwischenspindel und der Spindel gestoppt wird. Zu diesem Zeitpunkt tritt die an dem Belüftungselement vorgesehene Dichtung aus ihrer zylindrischen Anlagefläche an dem Ventilauslaufgehäuse aus, so dass auch der zwischen dem Dichtring und dem vorderen Ende des Ventilauslaufgehäuses eingeschlossene Bereich belüftet werden kann.

Die aus der US 4,475,570 vorbekannte Regulier- und Absperrarmatur weist den Nachteil auf, dass im Bereich der Belüftungsöffnung Wasser zwischen die Dichtflächen gelangen kann, durch welches bei Frosttemperaturen die freie Betätigung des Belüftungsventils verhindert oder gegebenenfalls zu Schäden in der Abdichtstruktur bei Betätigung der Absperrarmatur unter Frostbedingungen führen kann. Darüber hinaus erfordert die vorbekannte Absperrarmatur die Einhaltung von engen Fertigungstoleranzen, um das synchrone Einlaufen der Dichtung im Bereich des Ventilsitzgehäuses und das Auslaufen des Dichtringes im Bereich des Ventilauslaufgehäuses zeitgleich stattfinden zu lassen.

Die vorliegende Erfindung bezieht sich auf die Endmontage einer Regulier- und Absperrarmatur. Es ist beispielsweise aus dem DE U 298 20 782 ein gattungsgemässes Verfahren bekannt, wobei bei der Endmontage der Armatur diese über das Ventilsitzgehäuse im Innenbereich eines Gebäudes zu befestigen und das Zwischenrohr über eine das Mauerwerk durchsetzende Bohrung nach außen zu führen. Das Zwischenrohr und die Zwischenspindel sind herstellerseits mit Rücksicht auf unterschiedliche Wandstärken des Gebäudes hinreichend lang ausgebildet und so ist es erforderlich, vor dem Anbringen des Ventilauslaufgehäuses das Zwischenrohr und die Zwischenspindel abzulängen. Hierzu muss zunächst eine an dem vorderen Ende auf das Zwischenrohr aufgesetzte Frostkappe entfernt werden. Danach wird die Zwischenspindel aus dem Zwischenrohr herausgenommen. Mit einer ersten Schablone, die auf die Fassade aufgelegt wird, wird eine Stelle vorbestimmt, an der das Zwischenrohr abzulängen ist. Diese Stelle wird markiert und ein von der Gebäudewand vorspringender vorderer Endabschnitt wird von dem Zwischenrohr abgetrennt. Im vorderen Bereich des verbleibenden vorspringenden Längenabschnitts des Zwischenrohres das vom Hersteller üblicherweise mit einem Außengewinde versehen ist, wird das Auslaufgehäuse dichtend aufgeschraubt. Nunmehr wird die Zwischenspindel wieder in die Armatur eingeführt. Über das freie Ende der über die Armatur herausragenden Zwischenspindel wird eine zweite Schablone aufgeschoben, durch die die Trennstelle für die Zwischenspindel in Abhängigkeit eines vorbestimmten Bezugspunktes des Auslaufgehäuses bestimmbar ist. Die Zwischenspindel wird danach zusammen mit der zweiten Schablone aus der Armatur entnommen. Hierbei ist darauf zu achten, dass keine Relativbewegung zwischen der zweiten Schablone und der Zwischenspindel stattfindet. Die Zwischenspindel wird nunmehr abgelängt und danach in der Zwischenspindelaufnahme des Ventiloberteils befestigt und mit diesem in die Armatur eingeschoben.

Diese Verfahrensschritte sind relativ aufwendig. Darüber hinaus besteht bei der Benutzung der zweiten Schablone das weitere Problem, dass zur Ermittlung der verbleibenden Länge der Zwischenspindel bei Benutzung der zweiten Schablone die Zwischenspindel fest in die Armatur eingedrückt werden muss, um eine von dem Rückschlagventil ausgeübte Federkraft zu kompensieren und die Verbindungshülse des Rückschlagventils formschlüssig gegen den Ventilkegel anzulegen. Dementsprechend wird häufig die Zwischenspindel zu kurz abgelängt, da die zweite Schablone gegen einen Anschlagpunkt an dem Auslaufgehäuse zur Anlage gebracht wird, bevor die Zwischenspindel vollständig in Richtung auf das Ventilsitzgehäuse eingedrückt worden ist. Ferner kann es vorkommen, dass es bei einer zunächst korrekten Positionierung der zweiten Schablone bei einer unkontrollierten und von der Feder des Rückschlagventils verursachten Relativbewegung der Zwischenspindel zu einer Verschiebung der zweiten Schablone kommt. Dabei ist eine korrekte Ermittlung des abzutrennenden Endabschnitts der Zwischenspindel aber selbst dann nicht gewährleistet, wenn der Monteur diese Relativbewegung feststellt. Häufig schiebt der Monteur zur vermeintlichen Korrektur die Schablone bei festgehaltener Zwischenspindel wieder bis zu dem Bezugspunkt des Auslaufgehäuses, was zu einem zu kurzen Ablängen der Zwischenspindel führt.

Aus den genannten Gründen kann mit den vorerwähnten manuellen Verfahren zur Ermittlung der zutreffenden Länge des Zwischenrohres einerseits und der Zwischenspindel andererseits eine korrekte Endmontage der Regulier- und Absperrarmatur nicht zuverlässig gewährleistet werden. Mit der DE-U-203 05 404 ist dementsprechend bereits eine Auslaufarmatur der oben erwähnten Art vorgeschlagen worden, bei der jedenfalls das dem Auslaufgehäuse zugewandte Ende des Zwischenrohres wie auch das entsprechende Ende der Zwischenspindel in aufeinander abgestimmte Ablängsegmente unterteilt sind. Das Ablängen korrespondierender Ablängsegmente an dem Zwischenrohr einerseits und an der Zwischenspindel andererseits führt dementsprechend immer zu einer korrekten Abstimmung der beiderseitigen Längen. Bei diesem Stand der Technik besteht indes das Problem, dass lediglich diskrete Ablängsegmente vorgegeben werden können, die nicht immer genau zu der Wandstärke der entsprechenden Gebäudewand passen. Ferner müssen in der Fertigung die entsprechenden Ablängsegmente an der Zwischenspindel einerseits und dem Zwischenrohr andererseits mit hoher Genauigkeit und aufeinander abgestimmt angebracht werden.

Der vorliegenden Erfindung liegt das Problem zugrunde, ein Verfahren zur Endmontage einer Regulier- und Absperrarmatur anzugeben, mit dem eine einfache und fehlerfreie Montage des Auslaufgehäuses möglich ist.

Lösung des Problems wird mit der vorliegenden Erfindung ein Verfahren mit den Merkmalen von Anspruch 1 angegeben. Bei dem erfindungsgemäßen Verfahren werden in Abkehr von den vorbekannten Verfahren sowohl das Zwischenrohr als auch die Zwischenspindel im montierten Zustand in einem Arbeitsschritt abgelängt. Die Zwischenspindel wird dementsprechend nicht vorher aus dem Zwischenrohr entnommen, um diese auf Maß zu bringen. Das Ablängen von Zwischenrohr und Zwischenspindel erfolgt vielmehr zeitgleich. Danach wird bei dem erfindungsgemäßen Verfahren in an sich bekannter Weise das Auslaufgehäuse auf dem vorspringenden Längenabschnitt des Zwischenrohres montiert. Schließlich wird das Ventiloberteil in das Gehäuse eingesetzt und die Zwischenspindel bei an dem Auslaufgehäuse eingebrachtem Ventiloberteil fixiert. Als Fixieren im Sinne der Erfindung wird jede axiale Fixierung zwischen der Zwischenspindel und dem Ventiloberteil verstanden. Dem Fixierungsschritt kann ein Fügen von Zwischenspindel und Ventiloberteil vorgelagert sein, welches insbesondere dazu dient, die Zwischenspindel gegenüber dem Ventiloberteil zu zentrieren. Diese Zentrierung kann beim Einbringen des Ventiloberteiles in das Auslaufgehäuse erfolgen. Alternativ kann diese Zentrierung auch erfolgen, indem zunächst die abgelängte Zwischenspindel aus dem Zwischenrohr entnommen und in die Zwischenspindelaufnahme des Ventiloberteils eingesetzt, in dieser gegebenenfalls auch in axialer Richtung vorfixiert wird.

Die endgültige axiale Fixierung, d.h. diejenige axiale Feststellkraft, die beim Betrieb der Regulier- und Absperrarmatur die Zwischenspindel zuverlässig gegenüber dem Ventiloberteil in Position hält, wird bei dem erfindungsgemäßen Verfahren indes erst dann bewirkt, wenn das Ventiloberteil in das Auslaufgehäuse eingebracht ist. Dementsprechend erfolgt das Widerlagern der bei der axialen Fixierung erforderlichen Axialkraft dadurch, dass der Ventilkegel ventilsitzgehäuseseits fest widergelagert wird. Die Zwischenspindel wird vorzugsweise durch axialen Kraftschluss an dem Ventiloberteil fixiert. Besondere mechanische Rastmittel oder dergleichen, die beim Einbringen des Ventiloberteils in das Auslaufgehäuse eine Fixierung zwischen der Zwischenspindel und dem Ventiloberteil bewirken, sind danach nicht erforderlich. Für die axiale Fixierung reicht eine in axialer Richtung wirkende Klemmkraft.

Hierzu wird die Zwischenspindel gegenüber dem Ventiloberteil vorzugsweise ausschließlich axial verschoben. Die axiale Verschiebung kann durch eine Relativbewegung erfolgen, die innerhalb des Ventiloberteiles möglich ist. So kann das Ventiloberteil insgesamt, speziell die Zwischenspindelaufnahme bei in dem Auslaufgehäuse eingebrachtem Ventiloberteil axial verschieblich ausgebildet sein. Gemäß einer besonders einfachen bevorzugten Verfahrensführung wird diese axiale Verschiebung zur kraftschlüssigen Fixierung zwischen der Zwischenspindel und dem Ventiloberteil indes dadurch bewirkt, dass die Armatur abgesperrt wird. Hierbei wird zunächst der Ventilkegel zur Anlage an den Ventilsitz des Ventilsitzgehäuses gebracht. Bei zunehmender Absperrbewegung wird über die Zwischenspindel eine steigende Druckkraft übertragen, durch welche die Spindelaufnahme des Ventiloberteils in Richtung auf die Zwischenspindel zu bewegt wird und die dazu führt, dass die Zwischenspindel gegenüber dem Ventiloberteil kraftschlüssig fixiert wird.

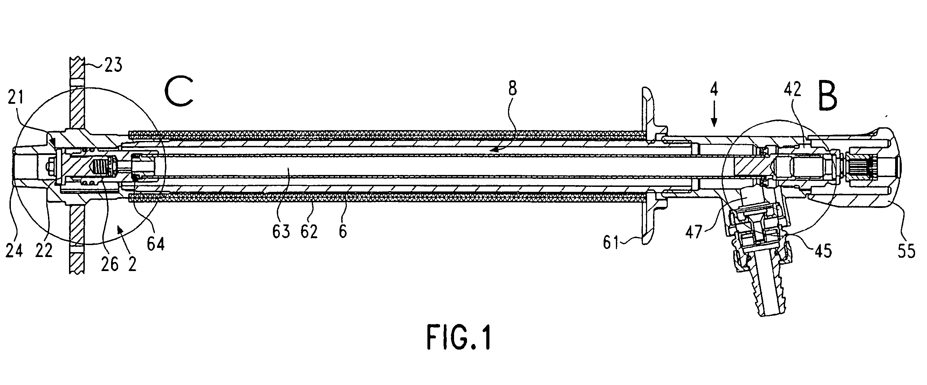

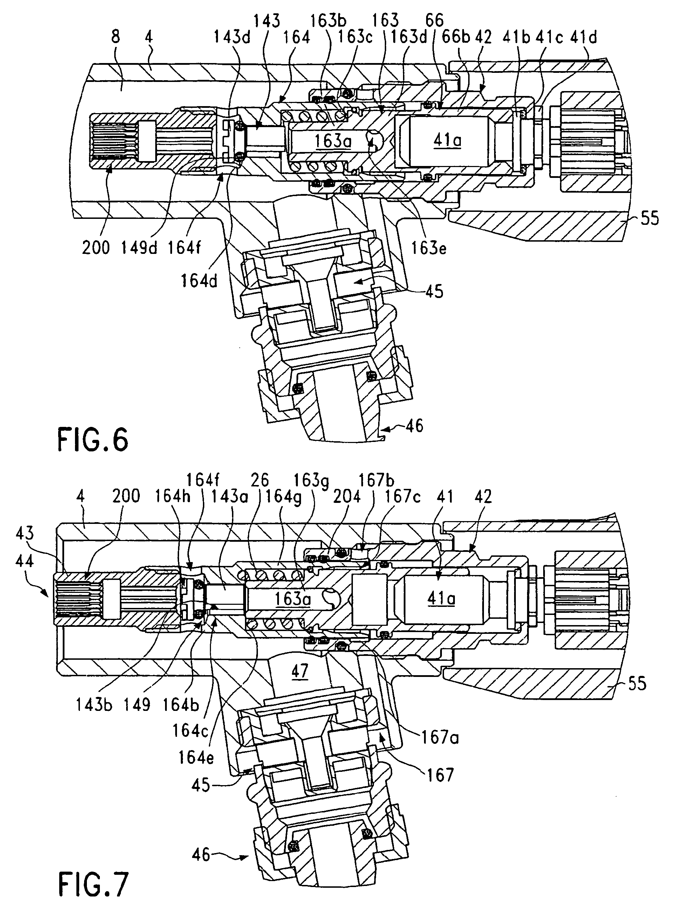

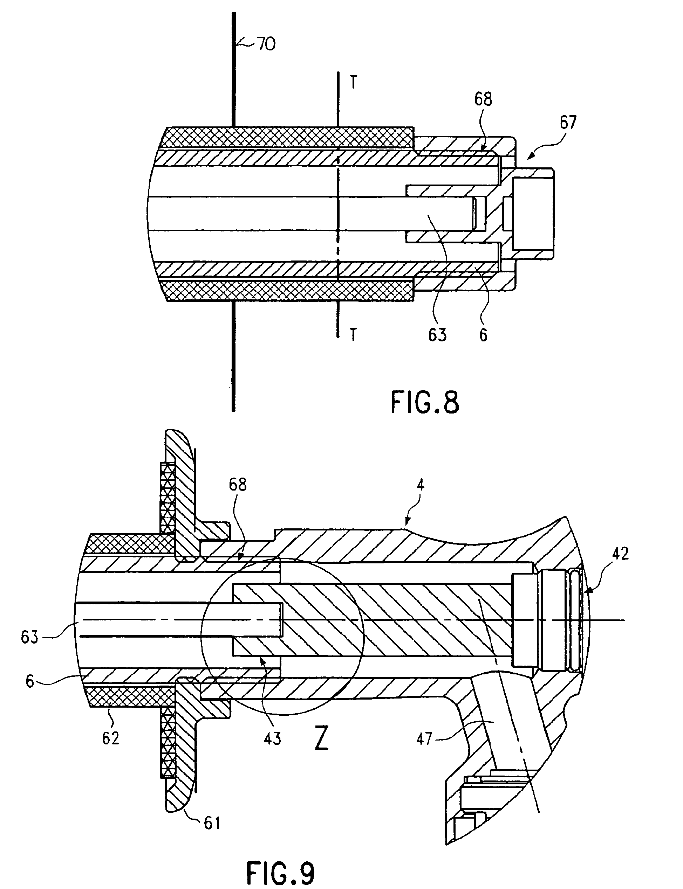

Die vorliegende Erfindung wird nachfolgend anhand der Zeichnung näher erläutert. In der Zeichnung werden zunächst mit den Figuren 1 bis 7 Beispiele konstruktiver Ausgestaltungen von Absperrarmaturen verdeutlicht, mit welchen das erfindungsgemäße Verfahren grundsätzlich durchgeführt werden kann. Die hierzu erforderliche konstruktive Ausgestaltung wird beispielhaft mit den Figuren 8 bis 12 verdeutlicht, zu denen auch die erfindungsgemäße Verfahrensführung erläutert wird. Diese Erläuterung erfolgt insbesondere unter Bezugnahme auf die Figuren 6 und 7. In der Zeichnung zeigen:
- Figur 1: eine Längsschnittansicht eines Beispiels einer Regulier- und Absperrarma- tur zur Verdeutlichung der wesentlichen Teile derselben;
- Figur 2: das Ventilauslaufgehäuse des in Figur 1 gezeigten Beispiels (Detail B) in vergrößerter Darstellung bei geöffneter Armatur;
- Figur 3: das Ventilsitzgehäuse des in Figur 1 gezeigten Beispiels (Detail C) bei ge- öffneter Armatur;
- Figur 4: die Darstellung gemäß Figur 2 bei geschlossener Armatur;
- Figur 5: die Darstellung gemäß Figur 3 bei geschlossener Armatur;
- Figur 6: ein Ventilauslaufgehäuse gemäß Detail C in Figur 1 für ein weiteres Bei- spiel bei geöffneter Armatur;
- Figur 7: das in Figur 6 gezeigte Beispiel bei geschlossener Armatur;
- Figur 8: die von einer Gebäudewandung abstehenden Enden von Zwischenspindel und Zwischenrohr eines weiteren Beispiels einer erfindungsgemäßen Re- gulier- und Absperrarmatur vor dem Ablängen;
- Figur 9: das in Figur 8 gezeigte Beispiel nach der Endmontage;
- Figur 10: ein erstes spezielles Beispiel einer Spindelaufnahme eines Ventiloberteils (Einzelheit Z gemäß Figur 9);
- Figur 11: ein zweites spezielles Beispiel einer Spindelaufnahme eines Ventiloberteils und
- Figur 12: ein drittes Beispiel einer Spindelaufnahme eines Ventiloberteils.

In Figur 1 sind die wesentlichen Bestandteile eines Beispiels einer als Wasserzapfstelle ausgebildeten Regulier- und Absperrarmatur gezeigt, die ein Ventilsitzgehäuse 2, ein Ventilauslaufgehäuse 4 und ein dazwischen angeordnetes, beide Gehäuse 2, 4 verdrehfest miteinander verbindendes Zwischenrohr 6 umfasst. An dem Ventilsitzgehäuse 2 ist ein Ventilsitz 21 ausgebildet, an welchen ein Ventilkegel 22 dichtend zur Anlage gebracht werden kann. Vorliegend erfolgt die Anlage nach Art eines Geradsitzventils. An der Außenumfangsfläche des Ventilsitzgehäuses 2 ist ein Befestigungsflansch 23 vorgesehen, welcher vorzugsweise an der Innenseite einer Gebäudewandung montiert wird. Befestigungsseitig weist das Ventilsitzgehäuse 2 ferner einen Einlaufstutzen 24 zum Anschluss an das Rohrleitungssystem des Gebäudes auf.

An der anderen Seite des Ventilsitzgehäuses 2 ist das Zwischenrohr 6 verdrehfest montiert, dessen Länge derart ist, dass eine Manschette 61 an der Außenwand einer fertigen Gebäudewand anliegt. Das Zwischenrohr 6 kann über seine gesamte Länge mit einer Isolierung 62 ummantelt sein. Vorliegend erstreckt sich die Isolierung 62 bis zu einer ringförmigen Anlagefläche der Manschette 61 an die Gebäudewand.

Zwischen der Zwischenspindel 63 und dem Zwischenrohr 6 ist ein Ringraum 8 ausgebildet, durch den Wasser in axialer Richtung durch die Armatur zu einem quer abgehenden und zu einem Rohrbelüfter 45 mit Schlauchtülle 46 führenden Auslasskanal 47 gelangen kann.

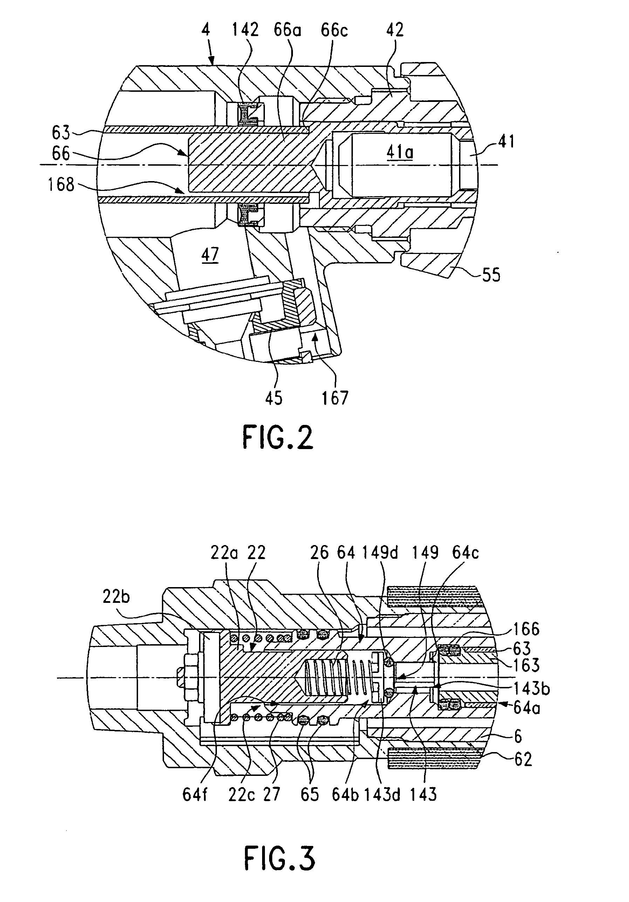

Bei dem in den Figuren 2 bis 5 gezeigten Beispiel ist die Zwischenspindel 63 als Hohlspindel ausgebildet und auslaufgehäuseseitig auf ein Kupplungsstück 66 aufgeschoben, welches hierzu einen auf den Innendurchmesser der Zwischenspindel 63 angepassten Zwischenspindelaufnahmekopf 66a aufweist, an dessen Umfangsfläche vorliegend eine Belüftungsnut 168 ausspart ist. Die Zwischenspindel 63 liegt stirnseitig gegen eine an dem Kupplungsstück 66 angeformte Kupplungsstückschulter 66c unter Vorspannung an Die Spindel 41 ist in einem Ventiloberteil 42 drehbar aufgenommen, welches in das Ventilauslaufgehäuse 4 eingeschraubt ist, und ist drehfest mit einem Drehgriff 55 verbunden. Die Spindel 41 weist einen Spindelkopf 41 a auf, der in an sich bekannter Weise mit einem Spindelgewinde versehen ist, welches in ein korrespondierend ausgebildetes Innengewinde eingreift, welches mit einem an dem Kupplungsstück 66 ausgebildeten, sich stirnseitig öffnenden Spindelaufnahmehülsenabschnitt 66b zusammenwirkt. An den Spindelkopf 41 a schließt sich ein Spindelbund 41 b (vergleiche Figur 6) an, der unter Zwischenlage eines Gleitringes 41 c zwischen sich und einem gegenüberliegenden äußeren Sprengring 41 d einen radial vorspringenden Anlagekranz 42b des Ventiloberteils 42 klemmt. Hierdurch ist die Spindel 41 axial jedoch frei drehbar in dem Ventiloberteil 42 gehalten.

Die hohle Zwischenspindel 63 durchragt einen Kontur-Dichtring 142, der sich zwischen dem Ventiloberteil 42 und dem Auslasskanal 47 bzw. dem Ringraum 8 befindet und der außenumfänglich dichtend an dem Ventilauslaufgehäuse 4 und innenumfänglich dichtend an der Zwischenspindel 63 anliegt. Dieser Kontur-Dichtring 142 wird durchsetzt von der Belüftungsnut 168, durch welche der Innenraum der hohlen Zwischenspindel 63 mit einem an dem Ventilauslaufgehäuse 4 ausgebildeten Lüftungskanal 167 kommuniziert. Der Belüftungskanal 167 verläuft bei dem gezeigten Beispiel parallel zu dem Auslasskanal 47, was den Vorteil mit sich bringt, dass beim Absperren der Regulier- und Absperrarmatur bei einem unter Druck stehenden, an die Schlauchtülle angeschlossenen Schlauch Wasser im Bereich der Schlauchtülle 46 aus der Armatur austreten kann.

An ihrem ventilsitzgehäuseseitigen Ende ist die hohle Zwischenspindel 63 längsverschieblich in einer Verbindungshülse 64 gehalten, die bei dem gezeigten Beispiel das Anspruchsmerkmal "Stellelement" ausbildet, welches axial verschieblich in der Armatur und auch axial verschieblich gegenüber der Spindel 41 geführt ist. Diese greift in eine zylindrische Kopfstückaufnahme 64a der Verbindungshülse 64 ein, die sich zu dem Auslaufgehäuse hin öffnet, und ist endseitig dichtend in ein rohrförmiges Kopfstück 163 eingesetzt, das an seiner Außenumfangsfläche ein O-Ringpaket 166 trägt, das in der Kopfstückaufnahme 64a dichtend anliegt.

Die Verbindungshülse 64 bildet an ihrem gegenüberliegenden Ende eine Ventilkegelaufnahmehülse 64b aus, in der ein Ventilkegelunterteil 22a, welches eine Dichtscheibe 22b des Ventilkegels 22 trägt, gleitverschieblich geführt ist. Das Ventilkegelunterteil 22a ist im Wesentlichen zapfenförmig ausgebildet und weist an seiner äußeren Umfangsfläche eine Ventilkegelunterteilnut 22c auf, durch welche der Ventilsitz 22 mit der Ventilkegelaufnahmehülse 64b kommuniziert. Das Ventilkegelunterteil 22a hat eine Bohrung, in der eine Feder 26 aufgenommen ist, die sich mit ihrem anderen Ende an einem Belüfterkegel 143 abstützt, der ein Beispiel für das Anspruchsmerkmal Belüftungselement darstellt und verschieblich in der Verbindungshülse 64 gelagert ist. Hierzu weist die Verbindungshülse 64 sich in axialer Richtung erstreckenden zylindrischen Führungsbereich 64c auf, der einen Belüftungskegelzapfen 143a des Belüfterkegels 143 umfänglich umgibt. Der Belüftungskegelzapfen 143a weist an seiner Außenumfangsfläche eine Kegelzapfennut 143b auf, die sich in axialer Richtung bis zu einem Dichtungselementsitz 143c des Belüftungskegels 143 erstreckt. Der Dichtungselementsitz 143c trägt ein Dichtungselement 149d in Form eines Dichtringes zur Abdichtung einer Belüftungsöffnung 149 und wird von einem Belüftungskegelteller 143d überragt. Gegen diesen Teller 143d stützt sich die Feder 26 ab. In der in Figur 3 gezeigten ersten, d. h. geschlossenen Stellung des Belüftungselementes 143 liegt der Dichtring 149d an einer durch das Stellelement 64 ausgebildeten Dichtanlagefläche 64d an, die zwischen der zylindrischen Wandung der Ventilkegelaufnahmehülse 64b und dem Führungsbereich 64c ausgeformt ist.

In der in Figur 3 gezeigten geöffneten Stellung der Armatur ist der Ventilkegel 22 gegen einen nicht dargestellten Anschlag der Verbindungshülse 64 unter Vorspannung der Feder 26 gegenüber der Verbindungshülse 64 in seiner Ausgangslage lagegesichert. Das Dichtungselement 149d wird durch die Vorspannung der Feder 26 und den Innendruck der Armatur dichtend gegen die Dichtanlagefläche 64d gedrückt. Die Belüftungsöffnung 149 ist geschlossen. Der Belüftungskegelzapfen 163a überragt eine den Führungsbereich 64c umgebende sich in radialer Richtung erstreckende ringförmige Anlagefläche 64e.

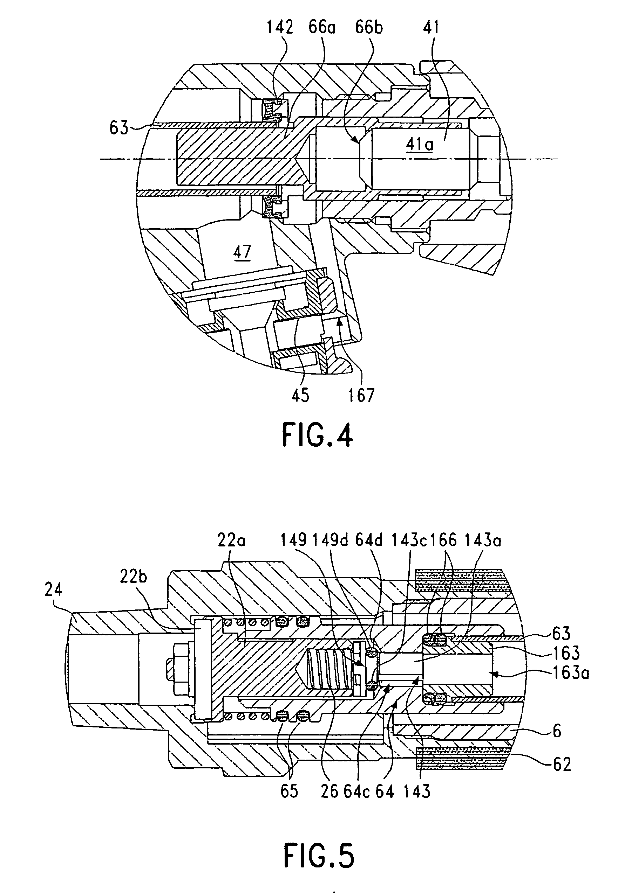

Wird nun das in den Figuren 2 bis 5 gezeigte Beispiel einer Regulier- und Absperrarmatur ausgehend von der in den Figuren 2 und 3 gezeigten geöffneten Stellung geschlossen (Figuren 4, 5), so ergibt sich Folgendes: Durch Drehung der Spindel 41 wird das Kopfstück 163 in Richtung auf das Ventilgehäuse 2 verschoben. Die an der Kupplungsstückschulter 66c anliegende Zwischenspindel 63 wird zwangsgeführt ebenfalls in Richtung auf das Ventilsitzgehäuse 2 verschoben. Die Zwischenspindel 63 drückt mit ihrem Kopfstück 61 gegen den Belüftungskegel 143, welcher wiederum aufgrund der Lagesicherung des Ventilkegels 22 gegenüber der Verbindungshülse 64 durch die Federkraft der Feder 26 und des Innendrucks der Armatur das Belüftungsventil 149 verschließt. Deren Rückstellkraft ist derart, dass der Belüftungskegel 143 auch dann an der Dichtanlagefläche 64d zunächst angelegt bleibt, wenn das Kopfstück 163 bei axialer Relativbewegung zwischen der Verbindungshülse 64 und dem Ventilsitzgehäuse 22 gegen den Belüftungskegelzapfen 143a drückt. Bei fortschreitendem Vorschub durch die Spindel 41 wird die Dichtscheibe 22b schließlich an den Ventilsitz 21 angelegt und eine zwischen der Dichtscheibe 22b und dem vorderen Ende der Verbindungshülse 64 angeordnete Rückstellfeder 27 wird zusammengepresst, bis schließlich das vorderste Ende der Verbindungshülse 64 gegen das Ventilkegelunterteil 22a anliegt.

Bei fortscheitender Drehbewegung der Spindel 41 wird schließlich die Zwischenspindel 63 relativ zu der Verbindungshülse 64 in Richtung auf den Ventilsitz 21 verschoben. Hierbei drückt das Kopfstück 163 gegen den Belüftungskegelzapfen 143a und verschiebt den Belüftungskegel 143 entgegen der Kraft der Feder 26. Dadurch wird die dichtende Anlage des Dichtringes 149d gegenüber der Dichtanlagefläche 64d aufgehoben. Die Belüftungsöffnung 149 wird geöffnet. Über den Belüftungskanal 167, die Belüftungsnut 168 und den Innenraum der Zwischenspindel 63, einen durch das Kopfstück 163 gebildeten Lüftungsdurchgang 163a, die Kegelzapfennut 143b und die Nut 22c des Ventilkegelunterteils 22b, welche einen zu dem Ringraum 8 führenden axialen Belüftungsdurchtritt ausbildet, kann nunmehr Luft in den Ringraum zwischen der Zwischenspindel 63 und dem Zwischenrohr 6 gelangen.

Diese belüftete Stellung der Armatur ist in den Figuren 4 und 5 zu sehen. In dem Ringraum 8 zwischen der Zwischenspindel 63 und dem Zwischenraum 6 enthaltenes Wasser kann nach Belüftung der Armatur abfließen. Selbst bei einem an die Schlauchtülle 64 unter Druck angeschlossenen Schlauch kann der in der Armatur bestehende Wasserdruck durch den Belüftungskanal 167 abgebaut werden.

Das in den Figuren 2 bis 5 gezeigte Beispiel hat den Vorteil, dass der ohnehin aus dem Stand der Technik bekannte und üblicherweise bei der gattungsbildenden Armatur verwirklichte Rückflussverhinderer, der dadurch gebildet ist, dass der Ventilkegel 22 durch die Feder 26 gegenüber der Verbindungshülse 64 unter Vorspannung der Rückstellfeder 27 an dem Ventilsitz 21 anliegt, zusätzlich auch der Zwangsentlüftung dient. Diese Zwangsentlüftung ist bei dem Beispiel zuverlässig auf solche Fälle beschränkt, bei denen das Ventil geschlossen ist. Eine Fehlfunktion kann daher ausgeschlossen werden. Darüber hinaus befindet sich die Belüftungsöffnung 149 in demjenigen Bereich der Regulier-Armatur, der frostsicher nahe des Gebäudeinneren angeordnet ist, so dass auch ein Einfrieren der im Bereich der Belüftungsöffnung 149 verhindert werden kann.

Bei dem in den Figuren 6 und 7 gezeigten Beispiel befindet sich das Belüftungselement 143 innerhalb des Ventilauslaufgehäuses 4. Gleiche Teile sind gegenüber dem vorher diskutierten Beispiel mit gleichen Bezugszeichen versehen.

Das Stellelement ist auch bei diesem Beispiel durch eine Verbindungshülse 164 gebildet, deren mittlerer Bereich zur Aufnahme des Belüftungskegels 143 korrespondierend zu dem entsprechenden Bereich der Verbindungshülse 164 in dem vorher diskutierten Beispiel ausgebildet ist. Ventilsitzgehäuseseitig schließt sich ein zylindrischer Kegeltelleraufnahmeabschnitt 164h an, der von zwei zu dem Ringraum 8 führenden dem Belüftungskegelteller 143d vorgelagerten Belüftungsdurchtritten 164f durchsetzt ist. Weiter in Richtung auf den Ventilsitz 21 vorgelagert ist eine Verbindungshülse 200 angeschraubt, die an ihrem stirnseitigen Ende eine Zwischenspindelaufnahme 43 aufweist, deren Ausgestaltung in der Beschreibung zu dem Beispielen der Figuren 8 ff. noch näher erläutert wird. An eine Anlagefläche 164e schließt sich ein Buchsenabschnitt 164g der Verbindungshülse 164 an, der mit seiner zylindrischen Außenumfangsfläche dichtend und axial verschieblich in einer Buchse 204 gehalten ist, die wiederum ortsfest und dichtend in das Ventilauslaufgehäuse 4 eingesetzt ist. Der Buchsenabschnitt 164g nimmt in sich einen Rohrabschnitt 163b auf, der einstückig an dem Kopfstück 163 angeformt ist und in seiner Mitte den Belüftungsdurchgang 163a ausbildet. Der Rohrabschnitt 163b geht über eine Ringfläche 163c in einen Zylinderabschnitt 163d, der in seinem hinteren Teil den Spindelaufnahmehülsenabschnitt 66b ausformt, über. An dem Zylinderabschnitt 163d ist außenumfänglich eine keilförmige Nut ausgebildet, in der ein Sprengring sitzt, durch welchen die axiale Verschiebung des Kupplungsstücks 66 relativ zu dem Stellelement 164 begrenzt wird. Zwischen der Ringfläche 163c und der Anlagefläche 164e befindet sich eine Feder 26, die das Kupplungsstück 66 aus dem Zylinderabschnitt 164g drängt und so das Kopfstück 163 mit dem einteilig daran angeformten Kupplungsstück 66 von dem Belüftungskegel 143 beabstandet.

Bei dem gezeigten Beispiel ist die Buchse 204 einteilig an den Ventiloberteil 42 angeformt, wobei zwischen beiden Bereichen 204, 42 eine zu dem Belüftungskanal 167 führende Querbohrung 167b ausgespart ist. Die Buchse 204 kann aber auch als separates Bauteil in das Ventilauslaufgehäuse 4 eingebaut sein.

Die Figur 6 zeigt die Absperrarmatur in geöffneter Stellung. Wird ausgehend von dieser geöffneten Stellung an dem Drehgriff 55 gedreht, so wandert das Kupplungsstück 66 in Richtung auf das Ventilsitzgehäuse 2 und entgegen der Kraft der Feder 26. Deren Federkraft ist dabei so eingestellt, dass zunächst keine Relativbewegung zwischen dem Kupplungsstück 66 und dem Stellelement 164 stattfindet und sich die Zwischenspindel 63 und der Ventilkegel 22 dem Ventilsitzgehäuse 2 nähern. Die Dichtscheibe 22b kommt schließlich zur Anlage an dem Ventilsitz 21. Bei fortschreitender axialer Bewegung des Kupplungsstücks 66 wird die Feder 26 komprimiert und die vordere Stirnseite des Rohrabschnitts 163b wird schließlich gegen das die Anlagefläche 164e überragende Ende des Belüftungskegelzapfen 143a gedrückt. Es ergibt sich eine Relativbewegung des Belüftungskegels 143 zu dem Stellelement 164, in Folge dessen die Belüftungsöffnung 149 freigegeben wird, so dass Luft durch den Belüftungskanal 167 und in einen Ringspalt 167a zwischen Auslaufsgehäuse 4 und Ventiloberteil 42 und durch eine Querbohrung 167b von dort in einen Ringspalt 8 zwischen dem Buchsenabschnitt 164g und dem Zylinderabschnitt 163d und von dort in die in dem Zylinderabschnitt 163d ausgeformte und zu dem Belüftungsdurchgang 163a führende Radialbohrung 163e gelangen kann. Von dort gelangt die Luft über die Kegelzapfennut 143b und die Belüftungsdurchtritte 164f zu dem Ringspalt 8, so dass das gesamte in dem Ringspalt 8 befindliche Wasser abfließen kann.

Beim Öffnen der Armatur fließt Wasser durch die Belüftungsdurchtritte 164f und trifft dort auf den Belüftungskegelteller 143d, der auch in der geöffneten Stellung des Belüftungskegels 143 den Belüftungsdurchtritten 164f in Strömungsrichtung nachgeordnet ist. Dementsprechend wird der Belüftungskegel bei dem gezeigten Beispiel allein aufgrund der Druckdifferenz des Wassers in die geschlossene Stellung zurückgedrängt; eine gesonderte Feder ist - im Gegensatz zu dem vorher diskutierten Beispiel - nicht erforderlich.

Nachstehend wird ein Ausführungsbeispiel des erfindungsgemäßen Verfahrens zur Endmontage des in den Figuren 6 und 7 gezeigten Beispiels der Regulier- und Absperrarmatur unter Bezugnahme auf die Figuren 8 ff. näher erläutert.

Bei der Montage einer solchen Regulier- und Absperrarmatur wird zunächst das Ventilsitzgehäuse 2 an eine im Gebäudeinnern liegende Innenwand angeschlagen. Das Zwischenrohr 6 und die Zwischenspindel 63 werden durch eine in der Gebäudewand 70 ausgesparte Maueröffnung nach außen geführt und überragen die Gebäudewand 70, wie beispielhaft in Figur 8 dargestellt.

Nunmehr wird von einem Monteur vor Ort die Isolierung 62 bündig mit der Hauswand abgeschnitten und das Zwischenrohr 6 wie auch die Zwischenspindel 63 mittels Schablone an gleicher Stelle durchtrennt, die in Figur 8 beispielhaft anhand der strichpunktierten Linie T-T angedeutet ist. Eine eventuell das vordere, freie Ende der Armatur verschließende Frostschutzkappe 67 kann hierbei am Ort verbleiben und die Zwischenspindel 63 in Position halten. Die Frostschutz- bzw. Bauschutzkappe 67 ist dabei vorzugsweise herstellerseits so auf das Zwischenrohr 6 und die Zwischenspindel 63 abgestimmt, dass die Zwischenspindel 63 axial durch den Ventilsitz 21 fixiert ist. Die Bauschutzkappe 67 drückt dementsprechend den Ventilkegel 22 gegen den Ventilsitz 21. Die zum Einsatz kommende Schablone wird vorzugsweise durch einen geschlitzten Zylinder gebildet. Der Schlitz hat eine solche Abmessung, dass die Schablone von der Außenumfangsfläche des überstehenden Längenabschnitts aufgebracht werden kann. Das an der Außenumfangsfläche des Zwischenrohres 6 herstellerseits vorgesehene Außengewinde 68 hat eine hinreichende Länge und befindet sich nach dem Ablängen weiterhin an dem vorspringenden Längenabschnitt. Die Isolierung 62 wird im Wesentlichen bis auf die Oberfläche der Gebäudewand 70 zurückgeschnitten. Die Manschette 61 wird auf das Zwischenrohr 6 aufgeschoben oder aufgeschraubt. Danach wird das Ventilauslaufgehäuse 4 auf das Außengewinde 68 aufgeschraubt.

Danach wird das Ventiloberteil 42 in das Ventilauslaufgehäuse 4 eingesetzt. Die Zwischenspindelaufnahme 43 weist eine im Wesentlichen an den Durchmesser der Zwischenspindel 63 angepasste Bohrung 44 auf, die vorzugsweise an ihrer Mündung zur Zentrierung der Zwischenspindel 63 angefasst ist. Zusätzlich kann auch die Zwischenspindel 63 im Bereich ihres freien Endes durch Zentriermittel konzentrisch in dem Zwischenrohr 6 gehalten sein. Beim Einsetzen des Ventiloberteils 42 in das Auslaufgehäuse 4 tritt dementsprechend das vordere Ende der Zwischenspindel 63 in die Bohrung 44 ein. Das Ventiloberteil 42 wird nunmehr vollständig in das Ventilauslaufgehäuse 4 eingeschraubt. Hierbei kann es zu einer weiteren axialen Verschiebung zwischen der Zwischenspindel 63 und der Zwischenspindelaufnahme 43 des Ventiloberteils 42 kommen.

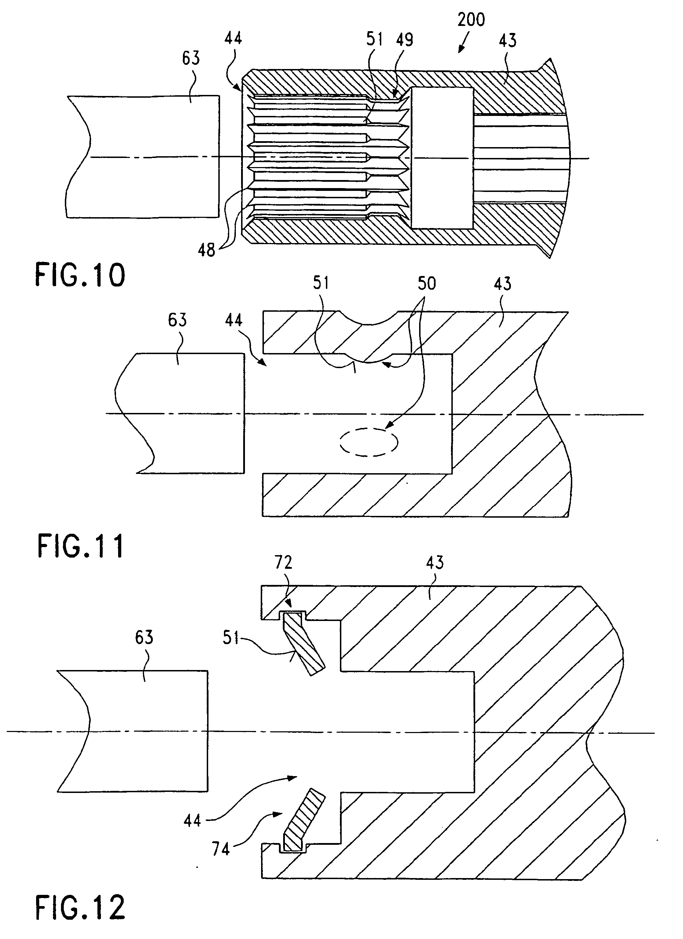

Nachdem das Ventiloberteil 42 seine Endposition erreicht hat, wird nunmehr durch Betätigen des Drehgriffs 55 die Armatur abgesperrt. Hierbei wird zunächst die Rückstellfeder 27 des Rückschlagventils komprimiert. Schließlich stößt die freie Stirnseite der Verbindungshülse 164 des Rückschlagventils gegen eine Gegenfläche des Ventilkegels 22, der wiederum sich an dem Ventilsitz 21 und somit an dem Ventilsitzgehäuse 2 abstützt. Die so festgelegte Zwischenspindel 63 wird im Rahmen der weiteren Absperrbewegung tiefer in die Bohrung 44 der Zwischenspindelaufnahme 43 eingeschoben und hierbei axial festgelegt, und zwar vorzugsweise mit Mitteln, die näher in den Figuren 10 und 12 dargestellt sind.

Bei dem in Figur 10 gezeigten Beispiel einer Zwischenspindelaufnahme 43 weist die Bohrung 44 einen Durchmesser auf, der wenig größer als der Durchmesser der Zwischenspindel 63 ist und an deren inneren Umfang ein Vielzahn mit einer Vielzahl von auf dem Umfang verteilt angeordneten Radialrippen 48 ausgebildet ist. Im mündungsnahen Bereich sind die Radialrippen 48 so auf den Außendurchmesser der Zwischenspindel 63 abgestimmt, dass diese von Hand, d.h. ohne maschinelle oder werkzeugmäßige Unterstützung in diesem vorderen Bereich der Bohrung eingeschoben werden kann. Hinter diesem vorderen Bereich der Bohrung 44 befindet sich eine die gesamte Bohrung konzentrisch verringernde Verjüngung 49, wobei sich die Radialrippen 48 bis zu der Verjüngung 49 hin fortsetzen.

Bei dem in Figur 11 gezeigten Beispiel weist die Bohrung 44 mehrere an dem Innenumfang der Bohrung 44 verteilt ausgebildete Verjüngungen in Form von Umformnasen 50 auf, die durch Umformbearbeitung der Außenumfangsfläche der Zwischenspindelaufnahme 43 hergestellt worden sind. In Figur 11 ist eine dieser Umformnasen 50 von der Schnittdarstellung erfasst.

Beim Fügen der in den Figuren 10 und 11 gezeigten Teile, beispielsweise beim manuellen Fügen von Zwischenspindel 63 und Ventiloberteil 42 vor dem Einsetzen des Ventiloberteils 42 in die Armatur, wird zunächst die Zwischenspindel 63 bis zu der Verjüngung 49 in die Bohrung 44 eingeschoben. Danach wird die Zwischenspindel 63 zusammen mit dem Ventiloberteil 42 in die Armatur eingeschoben. Das Ventiloberteil 42 wird in das Ventilauslaufgehäuse 4 bei geöffnetem Ventil eingeschraubt. Nachdem dieser Montageschritt beendet worden ist, sperrt der Monteur die Armatur ab, wodurch zunächst der Ventilkegel 22 gegen den Ventilsitz 21 gedrückt, danach die Verbindungshülse 164 gegen den Ventilkegel 22 angelegt wird und schließlich das vordere Ende der Zwischenspindel 63 tiefer in die Bohrung 44 eingedrückt wird. Hierbei drückt das stirnseitige Ende der Zwischenspindel 63 gegen eine oder mehrere durch die Verjüngung 49 ausgebildete Anlauframpen 51 und wird dort unter plastischer Verformung zwischen der Verjüngung 49 und der Zwischenspindel 63 dauerhaft in axialer Richtung fixiert. Die Zwischenspindel ist nunmehr in Bezug auf das Ventiloberteil unverlierbar und dauerhaft zuverlässig fixiert und gesichert.

Bei dem in Figur 12 gezeigten Beispiel weist die Zwischenspindelaufnahme 43 einen gegenüber dem Durchmesser der Zwischenspindel 63 deutlich im Innendurchmesser vergrößerten Eingangsbereich auf, in dem eine umlaufende Nut 72 zur Aufnahme eines Sicherungsrings 74 ausgespart ist, dessen radial innerer Bereich zur Ausbildung einer Anlauframpe 51 abgeschrägt ausgebildet ist, jedenfalls aber beim Einschieben der Zwischenspindel 63 in die Zwischenspindelaufnahme 43 durch Verformung eine solche Anlauframpe 51 ausbildet. In Einschieberichtung der Zwischenspindel 63 befindet sich hinter dem Sicherungsring 74 eine Bohrung 44, deren Durchmesser in etwa dem Außendurchmesser der Zwischenspindel 63 entspricht.

Bei dem in Figur 12 gezeigten Beispiel wird zunächst beim Einschieben der Zwischenspindel 63 in die Zwischenspindelaufnahme 43 der Sicherungsring 74 in axialer Richtung elastisch gebogen, bis schließlich die Zwischenspindel 63 den Sicherungsring 74 passieren kann. Durch die hierbei gebildete Anlauframpe 51 wird die Zwischenspindel 63 mit Rücksicht auf die Bohrung 44 fixiert und bei fortschreitender Einschiebebewegung in diese eingebracht. Die radial inneren Kanten des Sicherungsringes 74, der vorzugsweise aus Edelstahl gebildet ist, verkrallen sich hierbei an der vorzugsweise aus Messing gebildeten Zwischenspindel 63. Die Zwischenspindel 63 stößt mit ihrer Stirnseite gegen den Grund der Bohrung 44. In dieser Position ist die Zwischenspindel 63 in der Zwischenspindelaufnahme 43 unverlierbar fixiert.

### Bezugszeichenliste

- 2: Ventilsitzgehäuse
- 4: Ventilauslaufgehäuse
- 6: Zwischenrohr
- 8: Ringraum
- 21: Ventilsitz
- 22: Ventilkegel
- 22a: Ventilkegelunterteil
- 22b: Dichtscheibe
- 22c: Ventilkegelunterteilnut
- 23: Befestigungsflansch
- 24: Einlaufstutzen
- 26: Feder
- 27: Rückstellfeder
- 41: Spindel
- 41 a: Spindelkopf
- 41 b: Spindelbund
- 41c: Gleitring
- 41d: Sprengring
- 42: Ventiloberteil
- 42b: Anlagekranz
- 43: Zwischenspindelaufnahme
- 44: Bohrung
- 45: Rohrbelüfter
- 46: Schlauchtülle
- 47: Auslasskanal
- 48: Radialrippen
- 49: Verjüngung
- 50: Umformnase
- 51: Anlauframpe
- 55: Drehgriff
- 61: Manschette
- 62: Isolierung
- 63: Zwischenspindel
- 64: Verbindungshülse/Stellelement
- 64a: Kopfstückaufnahme
- 64b: Ventilkegelaufnahmehülse
- 64c: Führungsbereich/Zylinderabschnitt
- 64d: Dichtanlagefläche
- 64e: Anlagefläche
- 64f: Belüftungsdurchtritt
- 65: Dichtring
- 66: Kupplungsstück
- 66a: Zwischenspindelaufnahmekopf
- 66b: Spindelaufnahmehülsenabschnitt
- 66c: Kupplungsstückschulter
- 67: Frostschutzkappe
- 68: Außengewinde
- 70: Gebäudewand
- 72: Nut
- 74: Sicherungsring
- 142: Kontur-Dichtring
- 143: Belüftungskegel
- 143a: Belüftungskegelzapfen
- 143b: Kegelzapfennut
- 143c: Dichtungselementsitz
- 143d: Belüftungskegelteller
- 149: Belüftungsöffnung
- 149d: Dichtring
- 163: Kopfstück
- 163a: Belüftungsdurchgang
- 163b: Rohrabschnitt
- 163c: Ringfläche
- 163d: Zylinderabschnitt
- 163e: Radialbohrung
- 164: Verbindungshülse/Stellelement in Beispiel der Figuren 6 und 7
- 164a: Kopfstückaufnahme
- 164b: Ventilkegelaufnahmehülse
- 164c: Führungsbereich/Zylinderabschnitt
- 164d: Dichtanlagefläche
- 164e: Anlagefläche
- 164f: Belüftungsdurchtritt
- 164g: Buchsenabschnitt
- 164h: Kegeltelleraufnahmeabschnitt
- 166: O-Ringpaket
- 167: Belüftungskanal
- 167a: Ringspalt zwischen 42 und 164g
- 167b: Querbohrung in 42
- 167c: Ringspalt zwischen 164g und 163d
- 168: Belüftungsnut
- 200: Verbindungshülse
- 204: Buchse

## Patentansprüche

1. Verfahren zur Endmontage einer frostsicheren Regulier- und Absperraramatur mit einem in dem Innenbereich eines Gebäudes vorgesehenen und einen Ventilkegel (22) aufnehmenden Ventilsitzgehäuse (2), ein en für den Außenbereich des Gehäuses vorgesehenes und den Ventilkegel (22) stellendes Ventiloberteil (42) aufnehmendes Auslaufgehäuse (4) und einem sich zwischen dem Ventilsitzgehäuse (2) und dem Auslaufgehäuse (4) erstreckenden, durch die Wand des Gebäuden verlaufendes Zwischenrohr (6), das eine Zwischenspindel (63) umgibt, **dadurch gekennzeichnet, dass** ein vorderer Endabschnitt des Zwischenrohres (6) bei an dem Ventilkegel (22) angeschlossener Zwischenspindel (63) zusammen mit der Zwischenspindel (63) abgetrennt wird;
das Auslaufgehäuse (4) an einem über die Wand vorspringenden Längenabschnitt des Zwischenrohres (6) montiert wird; und
das Ventiloberteil (42) in das Auslaufgehäuse (4) eingesetzt und die Zwischenspindel (63) bei in dem Auslaufgehäuse (4) eingebrachtem Ventiloberteil (42) an dem Ventiloberteil (42) fixiert wird.

2. Verfahren nach Anspruch 1, **dadurch gekennzeichnet, dass** die Zwischenspindel (63) nach dem Abtrennen aus dem Zwischenrohr (6) entnommen wird, in eine an dem Ventiloberteil (42) ausgebildete Zwischenspindelaufnahme (43) eingeführt und zusammen mit dem Ventiloberteil (42) in das Auslaufgehäuse (4) eingeschoben wird.

3. Verfahren nach Anspruch 1 oder 2, **dadurch gekennzeichnet, dass** die Zwischenspindel (63) durch axialen Kraftschluss an dem Ventiloberteil (42) fixiert wird.

4. Verfahren nach Ansprüch 3, **dadurch gekennzeichnet, dass** der axiale Kraftschluss allein durch axiales Verschieben von Ventiloberteil (42) und Zwischenspindel (63) bewirkt wird.

## Claims

1. Method for the final assembly of a frost-resistant regulating and shut-off fitting having: a valve seat housing (2) which is provided in the inner region of a building and receives a valve cone (22); a discharge housing (4) which receives an upper part (42) of the valve and is provided for the outer region of the housing and positions the valve cone (22); and an intermediate pipe (6) which extends between the valve seat housing (2) and the discharge housing (4), runs through the wall of the building and surrounds an intermediate spindle (63);
**characterised in that**
a front end section of the intermediate pipe (6) is detached, together with the intermediate spindle (63), with said intermediate spindle connected to the valve cone (22);
the discharge housing (4) is fitted to a section of the length of the intermediate pipe (6) that projects above the wall; and
the upper part (42) of the valve is inserted in the discharge housing (4) and the intermediate spindle (63) is fixed, with the upper part (42) of the valve installed in the discharge housing (4), to said upper part (42) of the valve.

2. Method according to claim 1,
**characterised in that**
the intermediate spindle (63) is removed from the intermediate pipe (6) after the detaching operation, is introduced into an intermediate spindle receptacle (43) constructed on the upper part (42) of the valve and is inserted, together with said upper part (42) of the valve, in the discharge housing (4).

3. Method according to claim 1 or 2,
**characterised in that**
the intermediate spindle (63) is fixed to the upper part (42) of the valve by axial force-locking.

4. Method according to claim 3,
**characterised in that**
the axial force-locking is brought about solely by axial displacement of the upper part (42) of the valve and the intermediate spindle (63).

## Revendications

1. Procédé pour le montage final d'une robinetterie de régulation et d'arrêt antigel avec une enveloppe de siège de vanne (2) qui est prévue dans la zone intérieure d'un bâtiment et qui reçoit un cône de vanne (22), une enveloppe de sortie (4) qui reçoit un élément supérieur de vanne (42) prévu pour la zone extérieure du bâtiment et réglant le cône de vanne (22), et un tuyau intermédiaire (6) qui s'étend entre l'enveloppe de siège de vanne (2) et l'enveloppe de sortie (4), qui traverse le mur du bâtiment et qui entoure une broche intermédiaire (63),
**caractérisé en ce qu'**on sépare une section d'extrémité avant du tuyau intermédiaire (6) avec la broche intermédiaire (63) alors que celle-ci est raccordée au cône de vanne (22) ;
on monte l'enveloppe de sortie (4) sur une section longitudinale du tuyau intermédiaire (6) saillante par rapport au mur ; et
on introduit l'élément supérieur de vanne (42) dans l'enveloppe de sortie (4) et on fixe la broche intermédiaire (63) audit élément supérieur de vanne (42) alors que celui-ci est placé dans l'enveloppe de sortie (4).

2. Procédé selon la revendication 1, **caractérisé en ce que** la broche intermédiaire (63), après avoir été séparée, est enlevée du tuyau intermédiaire (6), est introduite dans un logement de broche intermédiaire (43) formé sur l'élément supérieur de vanne (42) et est glissée avec ce dernier dans l'enveloppe de sortie (4).

3. Procédé selon la revendication 1 ou 2, **caractérisé en ce que** la broche intermédiaire (63) est fixée par adhérence axiale à l'élément supérieur de vanne (42).

4. Procédé selon la revendication 3, **caractérisé en ce que** l'adhérence axiale est provoquée uniquement par le
glissement axial de l'élément supérieur de vanne (42) et de la broche intermédiaire (63).
